# EUROPEAN PATENT SPECIFICATION

(11) **EP 1 931 058 B1**
(45) Date of publication and mention of the grant of the patent: **22.08.2012**
(21) Application number: 06798110.0
(22) Date of filing: 19.09.2006
(51) Int. Cl.: H04B 1/38, H04L 25/03, H04B 7/08

(54) **DIVERSITY RECEPTION DEVICE**
DIVERSITÄTS-EMPFANGSEINRICHTUNG
DISPOSITIF DE RÉCEPTION EN DIVERSITÉ

(30) Priority: 28.09.2005 JP 2005282284
(43) Date of publication of application: 11.06.2008
(73) Proprietor: Pioneer Corporation, Kanagawa 212-0031 (JP)
(72) Inventor: YAMAMOTO, Yuji, Yamada Kawagoe-shi Saitama 350-8555 (JP)
(74) Representative: Sajda, Wolf E.
(86) International application number: PCT/JP2006/318499
(87) International publication number: WO 2007/037146

(56) References cited:
- EP-A1- 0 991 197
- EP-A2- 1 220 475
- EP-A2- 1 508 970
- GB-A- 2 246 676
- JP-A- 03 265 224
- JP-A- 03 265 228
- JP-A- 07 086 972
- JP-A- 57 150 241
- JP-A- 63 088 922
- JP-U- 02 073 837

## Description

### Technical Field

The present invention relates to a diversity receiver which receives incoming radio waves through a plurality of reception antennas.

### Background Technique

Regarding a receiver such as a radio or the like, when the level or the phase of an incoming radio wave changes due to a movement of an automobile, the radio will usually receive an undesirable influence such as a multi-pass fading, hence easily causing a deterioration in a reception quality. For this reason, there has been known a space diversity receiver which receives a radio wave by switching to a reception antenna capable of obtaining a batter reception quality.

However, since a space diversity receiver is usually constructed such that only one of its several reception antennas is selected to be contributive to an actual reception, there has been found the following problem. Namely, although such a space diversity receiver is effective in treating a flat fading in which an incoming radio wave does not contain a delay wave, its effect is not sufficient when there is an undesired influence based on a frequency selection fading, as in receiving an incoming radio wave containing a delay wave or the like.

EP 1220 475, on which the preamble of claim 1 is based, discloses reception adoption adding and demodulating.
In view of the above, there has been developed an improved receiver capable of dealing with the aforementioned frequency selection fading, as disclosed herein

As disclosed in the drawings or the like of Patent Document 1, the aforementioned conventional receiver (now being referred to as "synthesized diversity receiver", utilizes a plurality of reception antennas as well as an adaptation equalizer, performs an adaptation on reception signals output from the respective antennas, followed by synthesizing these signals, thereby obtaining a highly synthesized gain and thus ensuring an improved reception quality.

### Disclosure of the Invention

### Problem(s) to be Solved by the Invention

According to the aforementioned conventional synthesized diversity receiver, using a plurality of reception antennas as well as an adaptation equalizer makes it possible to obtain a synthesized gain which is higher than an example of performing a selective reception using only one reception antenna. In this way, it is possible to ensure an improved reception quality, as compared with a space diversity receiver equipped with a plurality of reception antennas but not taking any other measures.

However, using a plurality of reception antennas as well as an adaptation equalizer does not necessarily constitute a sufficient measure capable of overcoming a multi-pass fading. For example, when the field strengths of all incoming radio waves received by a plurality of reception antennas are weak (small), an audibly buzzing noise will occur in a sound reproduced by a speaker or the like.

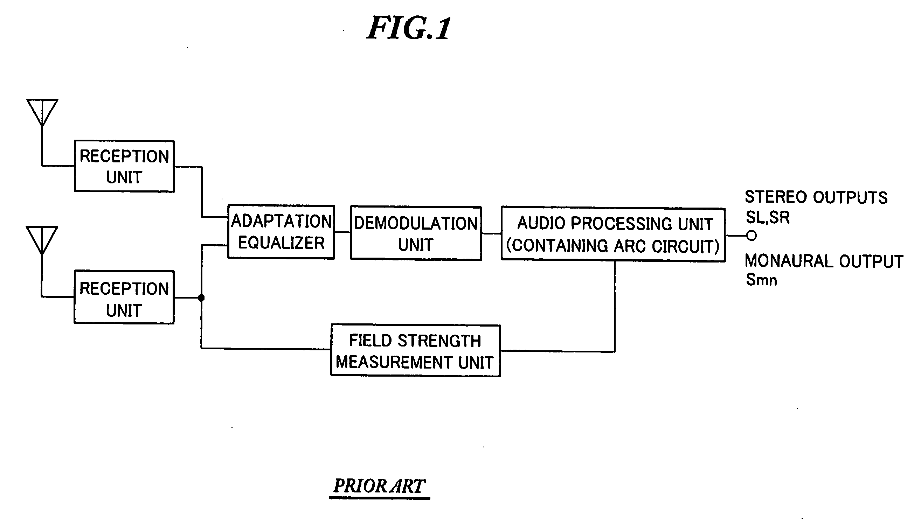

For this reason, as an example shown Fig. 1, a mobile receiver such as a car radio usually contains a compensation circuit called ARC (Automatic Reception Control) circuit, provided within an audio processing unit which decodes a demodulation signal demodulated by a demodulation unit. The ARC circuit operates in response to a change in a field strength measured according to an intermediate frequency signal (IF signal) output from a specific reception unit, outputting decoded audio signal as stereo outputs SL, SR or as a monaural output Smn, performing a mute processing for setting an actually stopped output state, or carrying out an ARC processing (for controlling the form of an output signal) such as a frequency characteristic adjustment and a frequency band restriction with respect to a monaural sound or a stereo sound, thereby preventing an audibly uncomfortable feeling.

Namely, as shown in Fig. 1, the ARC circuit performs an ARC processing when the adaptation equalizer performs an adaptation on the intermediate frequency signals (IF signals) output from the respective reception units connected to a plurality of reception antennas and synthesizes these IF signals, thereby generating a baseband signal having an increased synthesized gain. The ARC processing continues when the demodulation unit operates to demodulate the baseband signal into a demodulation signal and an audio processing unit decodes the demodulation signal and outputs the signal to a speaker or the like.

When the ARC circuit contained in the audio processing unit performs an ARC processing, the following processing will be performed in response to a field strength change measured by a field strength measuring unit, thereby reproducing an acceptable sound not having any audibly uncomfortable feeling. Such processing is a selection processing for selecting stereo outputs SL, SR or a monaural output Smn, or a mute processing and a processing for adjusting frequency characteristic or restricting frequency band with respect to a monaural sound or a stereo sound.

Moreover, the above-mentioned ARC circuit can also perform an ARC processing in response to a field strength change as well as to a level change of a noise component mixed in an intermediate frequency signal (IF signal) output from a specific signal receiving unit or the like.

However, since a receiver equipped with the above-discussed conventional ARC circuit usually performs an ARC processing in response to a change in a field strength of an intermediate frequency signal (IF signal) generated in a certain specific signal receiving unit or a change in the level of a noise component mixed in the IF signal or the like, there has been found the following problem. Namely, even if an appropriate adaptation processing is carried out by an adaptation equalizer or the like in a manner such that there will be no noise component occurring in a baseband signal, and even if a demodulation unit has generated a demodulation signal not containing any noise component or the like, there is still a trouble that when the audio processing unit decodes the demodulation signal, an ARC processing will be unnecessarily performed, hence undesirably causing an audibly uncomfortable feeling.

In other words, as shown in Fig. 1, the conventional technique is such that it involves a system containing an adaptation equalizer and a demodulation unit as well as another system for measuring a field strength and a noise component in order to perform an ARC processing, and that signal processing in each system and signals to be processed are individually independent without having any correlation among them (i.e., these processings being carried out are not in conformity with one another). As a result, providing an ARC circuit will bring about an undesired effect instead of a desired one.

The present invention has been accomplished in view of the above-discussed problems and it is an object of the invention to provide an improved receiver including adaptation equalizing means and ARC means for performing ARC processing, which receiver is strong against a multi-pass fading and capable of ensuring a further improved reception quality by carrying out processings having a well-adjusted conformity among them and corresponding reception method.

### Means for Solving the Problem

The object underlying the present invention is solved by means of a receiver and a receiving method for use with such a receiver as defined in patent claims 1and 4. Advantageous further developments of the receiver are specified in the subclaims.

Accordingly, the invention provides a receiver having a plurality of antennas for receiving incoming radio waves, the receiver comprising: reception means for receiving respective reception signals output from the plurality of antennas and converting the reception signals into respective intermediate frequency signals each having a predetermined frequency band; adaptation equalizing means for performing an adaptation processing on the respective intermediate frequency signals output from the reception means and adding together the intermediate frequency signals, thereby generating a synthesized intermediate frequency signal improved in its synthesized gain; demodulation means for demodulating the synthesized intermediate frequency signal generated in the adaptation equalizing means, thereby generating a demodulation signal; audio processing means including ARC means for decoding the demodulation signal to reproduce an original signal and for performing an ARC processing to control an output state of the original signal; reception state detection means for detecting a reception state from the plurality of the intermediate frequency signals output from the reception means; wherein the reception state detection means compute an average value of the plurality of the intermediate frequency signals output from the reception means, and detect a reception state based upon the computed average value; and field strength measurement means for measuring a field strength based upon a detection result of the reception state detection means and for generating a field strength detection signal; wherein the ARC means perform an ARC processing in accordance with the field strength detection signal generated by the field strength measurement means.

A further development of the receiver according to the invention comprises measurement means for measuring a noise component contained in the field strength detection signal generated by the field strength measurement, wherein the ARC means perform the ARC processing in accordance with the field strength detection signal and a noise detection signal measured by the first noise measurement means.

In a further development of the invention, the receiver comprises second noise measurement means for measuring a noise component contained in a synthesized intermediate frequency signal generated by the adaptation equalizing means, wherein the ARC means perform the ARC processing in accordance with the field strength detection signal and a noise detection signal measured by the second noise measurement means.

The invention also provides a reception method for use with a receiver having a plurality of antennas for receiving incoming radio waves, wherein the method comprises the following steps: a reception step for receiving respective reception signals output from the plurality of antennas and converting the reception signals into respective intermediate frequency signals each having a predetermined frequency band; an adaptation equalizing step for performing an adaptation processing on the plurality of intermediate frequency signals converted in the reception step, thereby generating a synthesized intermediate frequency signal improved in its synthesized gain; a demodulation step for demodulating the synthesized intermediate frequency signal generated in the adaptation equalizing step, thereby generating a demodulation signal; an audio processing step including an ARC processing step for decoding the demodulation signal to reproduce an original signal and for performing an ARC processing to control an output state of the original signal; a reception state detecting step for detecting a reception state from the plurality of the intermediate frequency signals converted in the reception step; wherein the reception state detection step computes an average value of the plurality of the intermediate frequency signals converted in the reception step, and detects a reception state based upon the computed average value; and a field strength measuring step for measuring a field strength based upon a detection result detected in the reception state detection step; wherein the ARC processing step performs an ARC processing in accordance with the field strength detection signal generated in the field strength measuring step.

### Brief Description of the Drawings

- Fig. 1: is a block diagram showing the composition of a conventional receiver.
- Fig. 2: is a block diagram showing the composition of a receiver formed according to an embodiment of the present invention.
- Fig. 3: is a block diagram showing the composition of a receiver formed according to one embodiment, in which Fig. 3(a) shows a reception state detector, and Fig. 3(b) is a block diagram showing the composition of adaptation means for performing an adaptation processing.
- Fig. 4: is a block diagram showing the composition of a receiver formed according to another example in which Fig. 4(a) shows a reception state detector, and Fig. 4(b) is a block diagram showing the composition of a maximum value detector provided within the reception state detector.

### Best Mode of Carrying Out the Invention

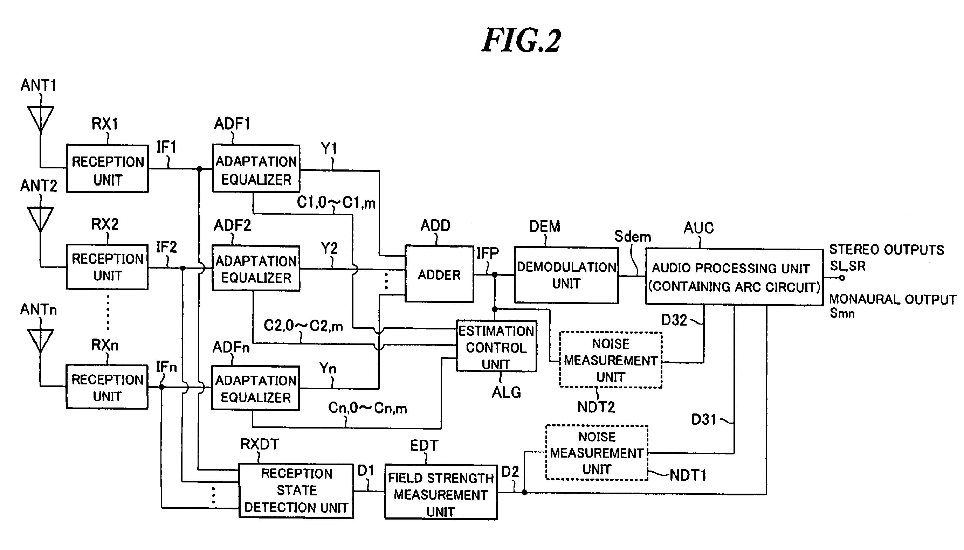

A preferred embodiment of the present invention will be described with reference to Fig. 2. Fig. 2 is a block diagram showing the composition of a receiver formed according to an embodiment of the present invention.

As shown in Fig. 2, the receiver of the present embodiment comprises: a plurality of reception units RX1-RXn connected corresponding to a plurality of reception antennas ANT1-ANTn; adaptation equalizing means including adaptation equalizers ADF1-ADFn provided corresponding to the reception antennas ANT1-ANTn, an adder ADD and a estimation control unit ALG; a demodulation unit DEM; and an audio processing unit AUC. The receiver further comprises a reception state detection unit RXDT and a field strength measurement unit EDT.

Each of n reception units RX1-RXn performs a tuning reception on a desired broadcast channel (physical channel) designated by a listener/viewer, to carry out a frequency conversion so as to convert the respective RF reception signals output from the reception antennas ANT1-ANTn into intermediate frequency signals. Further, the reception units RX1-RXn apply predetermined frequency band limitations to these intermediate frequency signals and amplify the same, thereby generating intermediate frequency signals (IF signal) IF1-IFn as desired wave components and supplying the same to the adaptation equalizers ADF1-ADFn.

All of the adaptation equalizers ADF 1 - ADFn are formed of filters such as transversal filters or the like, multiply the intermediate frequency signals IF1-IFn by the tap values of the tap coefficients specified by the estimation control unit ALG (in synchronism with a predetermined sampling frequency) and supply the multiplying results Y1-Yn to the adder ADD. In detail, the adaptation equalizer ADF1 multiplies an intermediate frequency signal IF1 by the tap values C1,0-C1,m of m (m is an appropriate number) tap coefficients specified by the estimation control unit ALG, and outputs a multiplication result Y1.
Similarly, the adaptation equalizer ADF2 multiplies an intermediate frequency signal IF2 by the tap values C2,0-C2,m of m tap coefficients specified by the estimation control unit ALG, and outputs a multiplication result Y2. In the same way, any adaptation equalizer ADFn multiplies an intermediate frequency signal IFn by the tap values Cn,O-Cn,m of m tap coefficients specified by the estimation control unit ALG, and outputs a multiplication result Yn.

The adder ADD, by adding together the above-mentioned multiplication results Y1-Yn, generates and thus outputs a series of intermediate frequency signals (hereinafter, referred to as "synthesized intermediate frequency signals") as so-called impulse response train which has received an adaptation processing and has been synthesized.

The estimation control unit ALG processes the synthesized intermediate frequency signal IFP in accordance with a predetermined adaptation algorithm, thereby estimating a changed transmission line characteristic of an incoming radio wave, generating coefficient values C1, 0 - C1, m; C2, 0 - C2, m; ....; Cn,0 - Cn, m of tap coefficients for constantly maintaining the estimated transmission line characteristic at an optimal state, and thus controlling the above-mentioned adaptation equalizers ADF1 - ADFn. Here, the above-mentioned adaptation algorithm is allowed to be CMA (for use with constant envelope signal) algorithm, MMSE (maximum square error) algorithm, MSN (maximum SNR) algorithm, CMP (minimum output power with restraint) algorithm and the like.

The demodulation unit DEM demodulates the synthesized intermediate frequency signal IFP to generate a demodulation signal Sdem and supplies the same to the audio processing unit AUC.

The audio processing unit AUC decodes the demodulation signal Sdem, thereby reproducing signals which have not been encoded on broadcast station side, i.e., "original signals" representing sound such as music or the like.

Furthermore, ARC circuit is provided within the audio processing unit AUC to perform an ARC processing which outputs the above-mentioned decoded audio signals as stereo outputs SL, Sr or monaural output Smn, in accordance with the field strength detection signal D2 supplied from the bellow-mentioned field strength measurement unit EDT. Alternatively, an ARC processing may be performed to effect a soft mute processing for reducing a sound volume in accordance with a predetermined time constant so as to reduce a noise amount, or adjust a frequency characteristic or limit a frequency band with respect to a monaural sound or a stereo sound. As a result, it becomes possible to reduce an audibly uncomfortable feeling.

The reception state detection unit RXDT receives the intermediate frequency signals IF1-IFn output from n reception units RX1-RXn, calculates at every moment an average value D1 of the levels of the intermediate frequency signals IF1-IFn, and outputs the same as a signal indicating an actual reception state.

The field strength measurement unit EDT measures a field strength in accordance with an average value D1 which is a signal output from the reception state detection unit RXDT and indicating an actual reception state, and supplies a filed strength detection signal D2 indicating the measurement result to the ARC circuit provided within the audio processing unit AUC. Then, as described above, the ARC circuit performs an ARC processing which outputs the above-mentioned decoded audio signals as stereo outputs SL, Sr or monaural output Smn, in accordance with the field strength detection signal D2.
Alternatively, an ARC processing may be performed to effect a soft mute processing for reducing a sound volume in accordance with a predetermined time constant so as to reduce a noise amount, or adjust a frequency characteristic or limit a frequency band with respect to a monaural sound or a stereo sound. As a result, it becomes possible to reduce an audibly uncomfortable feeling.

According to the receiver of the present embodiment having the above-described structure, it is possible for n reception units RX1-RXn to simultaneously receive a plurality of incoming radio waves arriving at the plurality of reception antennas ANT1 - ANTn, apply an adaptation to the intermediate frequency signals IF1-IFn output from the reception units RX1-RXn, using an adaptation equalizing section including the adaptation equalizers ADF1 - ADFn, the adder ADD as well as the estimation control unit ALG, thereby obtaining a synthesized gain higher than an example using only one reception antenna to selectively receive an arrival signal.
In addition, it is possible to generate a synthesized intermediate frequency signal IFP having compensated an undesired effect resulting from a multi-pass fading (especially, a frequency-selective fading). Further, the demodulation unit DEM demodulates the synthesized intermediate frequency signal IFP, thereby generating a high quality demodulation signal Sdem having reduced an invaded noise or the like and supplying the same to the audio processing unit AUC.

On the other hand, the reception state detection unit RXDT and the field strength measurement unit EDT will measure a field strength detection signal D2 in accordance with an average value D1 of the intermediate frequency signals IF1-IFn output from n reception units RX1-RXn, while the audio processing unit AUC decodes the demodulation signal Sdem.
At this time, the ARC circuit within the audio processing unit AUC will operate in accordance with the field strength detection signal D2 to output the above-mentioned decoded audio signal as stereo outputs SL, Sr or monaural output Smn, or to effect a soft mute processing for reducing a noise amount, or to adjust a frequency characteristic or limit a frequency band with respect to a monaural sound or a stereo sound. As a result, it becomes possible to output a sound signal or the like which does not cause an audibly uncomfortable feeling.

Namely, rather than performing only the aforementioned adaptation processing and ARC processing, the receiver of the present embodiment, when adapting the intermediate frequency signals IF1-IFn and decoding the demodulation signal Sdem, performs an ARC processing based on a field strength detection signal D2 measured in accordance with an average value D1 of the intermediate frequency signals IF1-IFn output from the reception units RX1-RXn. As a result, it is possible to ensure a conformity between an adaptation processing and an ARC processing, thereby ensuring a higher reception quality without being affected by a multi-pass fading.

Although the above-described embodiment measures a field strength detection signal D2 in accordance with an average value D1 of the intermediate frequency signals IF1-IFn output from the reception units RX1-RXn, it is also possible for the reception state detection unit RXD to detect an intermediate frequency signal of a maximum level among the intermediate frequency signals IF1-IFn output from the reception units RX1-RXn (without using the aforementioned average value D1), measure a field strength in accordance with the detected intermediate frequency signal D1 of the maximum level, thus generating a field strength detection signal D2.
In this way, where a field strength detection signal D2 is generated based on an intermediate frequency signal D1 of maximum level, it is possible to detect an intermediate frequency signal D1 capable of ensuring an optimal reception state. As a result, it is possible to obtain the same effect as obtainable in an example of generating the field strength detection signal D2 in accordance with an average value D1 of the intermediate frequency signals IF1-IFn output from the reception units RX1-RXn, thereby ensuring a desired conformity between an adaptation processing and an ARC processing, thus ensuring an improved reception quality stronger against a multi-pass fading.

Moreover, a modified embodiment can be described as follows. Namely, rather than using the ARC circuit within the audio processing unit AUC to perform an ARC processing in accordance with the field strength detection signal D2 measured by the field strength measurement unit EDT based on the aforementioned average value or an intermediate frequency signal D1 of maximum level, it is also possible to provide a noise measurement unit NDT1 to measure the level of a noise component contained in the field strength detection signal D2 and for the ARC circuit to perform an ARC processing based on a noise detection signal D31 measured by the noise measurement unit NDT1 as well as on the field strength detection signal D2, as shown in Fig. 2.

Furthermore, another modified embodiment can be such that the noise measurement unit NDT1 is replaced by a noise measurement unit NDT2 for measuring the level of a noise component contained in a synthesized intermediate frequency signal IFP which is to be input into the demodulation unit DEM, thereby allowing the ARC circuit to perform an ARC processing, based on a noise detection signal D32 measured by the noise measurement unit NDT2, as well as on the field strength detection signal D2 measured according to the aforementioned average value or the intermediate frequency signal D1 of maximum level, as shown in Fig. 2.
In this way, once an ARC processing based on the ARC circuit is performed in response to the level of a noise component contained in a synthesized intermediate frequency signal IFP, such an ARC processing can be carried out in response to a noise component which is contained in a synthesized intermediate frequency signal IFP having received an adaptation processing and has a correlation with a human's auditory characteristic, thereby making it possible to ensure a further improved reception quality.

### Embodiment 1

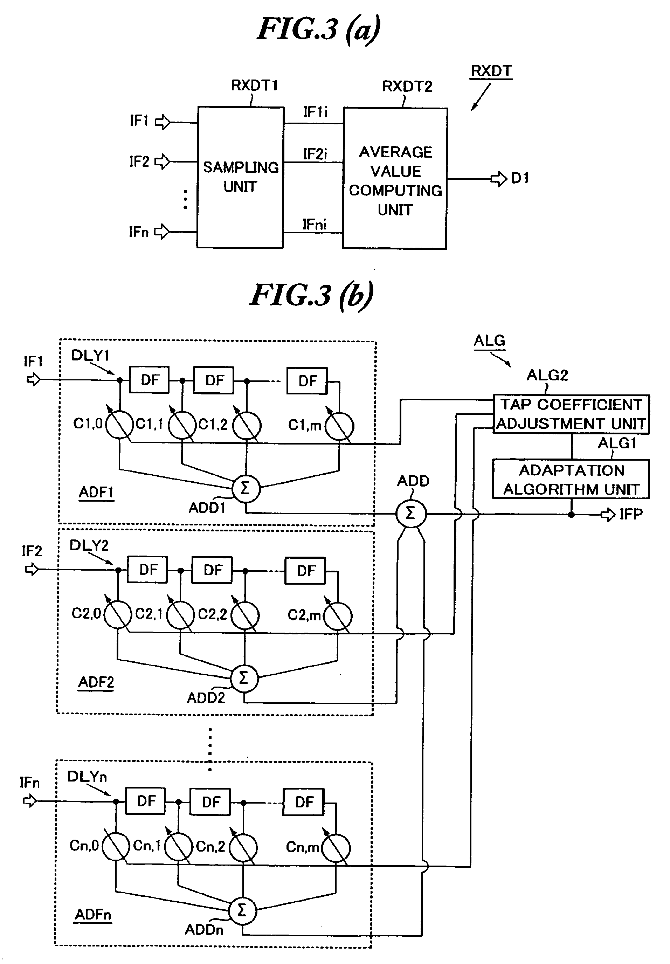

Next, description will be given to explain a more detailed embodiment which is a receiver capable of receiving an FM broadcast, with reference to Fig. 3. Fig. 3(a) is a block diagram indicating a structure corresponding to the reception state detection unit RXDT shown in Fig. 2. Fig. 3(b) is a block diagram indicating a structure corresponding to the adaptation equalizers ADF1 - ADFn, the adder ADD and the estimation control unit ALG shown in Fig. 2.

In fact, the receiver of the present embodiment has substantially the same structure as the receiver shown in Fig. 2.
Namely, n reception units RX1-RXn connected with the reception antennas ANT1 - ANTn perform tuning receptions with respect to a desired FM broadcast channel (physical channel) designated by a viewer/listener, thereby converting the respective RF reception signals output from the reception antennas ANT1-ANTn into intermediate frequency signals.
Further, by limiting the frequency bands of these intermediate frequency signals to a predetermined frequency band, the intermediate frequency signals (IF signals) IF1-IFn are generated as desired wave components and supplied to the adaptation equalizers ADF1 - ADFn. In addition, the respective reception units RX1-RXn operate to convert the intermediate frequency signals IF1-IFn into digital signals in accordance with a sampling frequency fs (a predetermined frequency) based on a sampling theorem, and supply the signals as digital signals to the adaptation equalizers ADF1 - ADFn.

As shown in Fig. 3(b), the adaptation equalizers ADF1-ADFn are formed of transversal filters comprising: shift register units DLY1 - DLYn having m stages of delay elements DF which receive and shift the intermediate frequency signals IF1-IFn with an inverse number (1/fs) of the aforementioned sampling frequency fs serving as one delay time; m+1 multipliers for multiplying the output signals of the respective delay elements DF by the coefficient values C1,0-C1,m; C2,0-C2,m; ..., Cn,0-Cn,m of the tap coefficients; and adders ADD1 - ADDn for adding together the outputs of the respective multipliers.

Namely, the adaptation equalizer ADF1 which receives an intermediate frequency signal IF1 from the reception unit RX1 is formed of a transversal filter comprising:
a shift register unit DLY1 having m stages of delay elements DF which receive and shift an intermediate frequency signal IF1 with an inverse number (1/fs) of the aforementioned sampling frequency fs serving as one delay time; m+1 multipliers for multiplying the output signals of the respective delay elements DF by the coefficient values C1,0-C1,m of the tap coefficients; and an adder ADD1 for adding together the outputs of the respective multipliers.

The adaptation equalizer ADF2 which receives an intermediate frequency signal IF2 from the reception unit RX2 is formed of a transversal filter comprising: a shift register unit DLY2 having m stages of delay elements DF which receive and shift an intermediate frequency signal IF2 with an inverse number (1/fs) of the aforementioned sampling frequency fs serving as one delay time; m+1 multipliers for multiplying the output signals of the respective delay elements DF by the coefficient values C2,0-C2,m of the tap coefficients; and an adder ADD2 for adding together the outputs of the respective multipliers.

Similarly, an adaptation equalizer ADFn which receives an intermediate frequency signal IFn from the reception unit RXn is formed of a transversal filter comprising: a shift register unit DLYn having m stages of delay elements DF which receive and shift an intermediate frequency signal IFn with an inverse number (1/fs) of the aforementioned sampling frequency fs serving as one delay time; m+1 multipliers for multiplying the output signals of the respective delay elements DF by the coefficient values Cn,O-Cn,m of the tap coefficients; and an adder ADDn for adding together the outputs of the respective multipliers.

An adder ADD adds together the addition results output from the adders ADD1-ADDn contained within the respective adaptation equalizers ADF1-ADFn, thereby generating an intermediate frequency signal (synthesized intermediate frequency signal) IFP as so-called impulse response train having received an adaptation processing, and supplying the same to an FM demodulation unit corresponding to the demodulation unit DEM shown in Fig. 2. Then, an audio signal decoded in the FM demodulation unit is supplied to the audio processing unit AUC shown in Fig. 2.

Again, as shown in Fig. 3(b), the adaptation algorithm unit ALG1 processes the synthesized intermediate frequency signal IFP according to a predetermined adaptation algorithm, estimates a transmission line characteristic of an incoming radio wave, and supplies the estimation result to the tap coefficient adjustment unit ALG 2. In the present embodiment, the aforementioned algorithm may be CMA (Constant Modulus Algorithm) which detects an undesired effect caused by a multi-pass fading as an error between a predetermined reference value and a changed level of the synthesized intermediate frequency signal, performs an adaptation control on the aforementioned coefficient values C1,0-C1,m; C2,0-C2,m; ..., Cn,0-Cn,m to inhibit the occurrence of the error. On the other hand, it is also possible to employ other algorithms such as MMSE (maximum square error) algorithm, MSN (maximum SNR) algorithm, and CMP (minimum output power with restraint) algorithm.

The tap coefficient adjustment unit ALG2 is formed based on a database having a look-up table, and specifies the coefficient values C1,0-Cl,m; C2,0-C2,m; ..., Cn,O-Cn,m for inhibiting an undesired effect caused by a multi-pass fading, in accordance with an estimation result supplied from the adaptation algorithm unit ALG1. Then, the tap coefficient adjustment unit ALG2 adjusts the tap coefficients of the respective multipliers within the adaptation equalizer ADF1 in accordance with the coefficient values C1,0-C1,m, and the tap coefficients of the respective multipliers within the adaptation equalizer ADF2 in accordance with the coefficient values C2,0-C2,m. Similarly, the tap coefficient adjustment unit ALG2 adjusts the tap coefficients of the respective multipliers within any adaptation equalizer ADFn in accordance with the coefficient values Cn,O-Cn,m.

Next, as shown in Fig. 3(a), the reception state detection unit RXDT shown in Fig. 2 comprises a sampling unit RXDT1 and an average value computing unit RXDT2. The sampling unit RXDT1 receives in parallel A/D-converted intermediate frequency signals IF1-IFn in synchronism with the aforementioned sampling frequency fs. The average value computing unit RXDT2 computes an average value D1 of the intermediate frequency signals IFli-IFni sampled in the sampling unit RXDT1. Then, the average value D1 which is a computation result is supplied to the field strength measurement unit EDT shown in Fig. 2, while the field strength detection signal D2 indicating a field strength measured by the strength measurement unit EDT is supplied to the ARC circuit within the audio processing unit AUC.
Meanwhile, a noise detection signal D31 indicating a noise level measured by the noise measurement unit NDT1 is also supplied to the ARC circuit. Then, once the field strength detection signal D2 and the noise detection signal D31 are supplied to the ARC circuit, the ARC circuit will analyze variations in the field strength detection signal D2 and the noise detection signal D31 based on a predetermined algorithm. If it is judged that a reception state at this time is acceptable, audio signals decoded by the audio processing unit AUC will be output as stereo outputs SL, SR.
On the other hand, if it is judged that a field strength is high but an amount of noise component is large, the frequency characteristic of the noise component will be analyzed, and the frequency band of the stereo outputs SL, SR will be limited and then output in response to an extent of an undesired effect on the stereo outputs SL, SR due to the noise component, thereby outputting an audio signal as a monaural output. Besides, if it is judged that a field strength is low and an amount of noise component is large, a soft mute processing will be carried out to reduce the noise amount.

According to the receiver of the present embodiment having the above-described structure, the radio waves arriving at a plurality of (n) reception antennas ANT1-ANTn are simultaneously received by n reception units RX1-RXn. Then, adaptation processing is applied to the intermediate frequency signals IF1-IFn by virtue of the adaptation equalizers ADF1 - ADFn, the adder ADD and the estimation control unit ALG, thereby obtaining a synthesized gain higher than an example of using only one reception antenna to perform an elective reception.
Further, it is possible to generate a synthesized intermediate frequency signal IFP having compensated an undesired effect caused by a multi-pass fading. In addition, using a demodulation unit DEM to demodulate a synthesized intermediate frequency signal makes it possible to generate a high quality demodulation signal Sdem having reduced the mixing of a noise or the like and supply the signal to the audio processing unit AUC.

On the other hand, when the reception state detection unit RXDT, the field strength measurement unit EDT, and the noise measurement unit NDT1 measure a field strength detection signal D2 and the noise detection signal D31 in accordance with an average value D1 of the intermediate frequency signals IF1-IFn output from n reception units RX1-RXn, and when the audio processing unit AUC decodes a modulation signal Sdem, the ARC circuit within the audio processing unit AUC will operate in accordance with the field strength detection signal D2 and the noise detection signal D31, so as to output the above-mentioned decoded audio signal as stereo outputs SL, Sr or monaural output Smn, or to effect a soft mute processing for reducing a noise amount, or to adjust a frequency characteristic or limit a frequency band with respect to a monaural sound or a stereo sound. As a result, it becomes possible to output a sound signal or the like which does not cause an audibly uncomfortable feeling.

Namely, the receiver of the present embodiment, when adapting the intermediate frequency signals IF1-IFn and decoding the demodulation signal Sdem, performs an ARC processing based on the field strength detection signal D2 measured in accordance with an average value D1 of the intermediate frequency signals IF1-IFn output from the reception units RX1-RXn as well as on a noise detection signal D31. As a result, it is possible to ensure a conformity between an adaptation processing and an ARC processing, thereby ensuring a higher reception quality without being affected by a multi-pass fading.

Although the receiver of the present embodiment having the above-discussed structure has been described as having the noise measurement unit shown in Fig. 2, it is also possible for the present invention to have the following modified embodiment. Namely, a further modified embodiment can be such that the noise measurement unit NDT1 has been replaced by a noise measurement unit NDT2 for measuring the level of a noise component contained in a synthesized intermediate frequency signal IFP which is to be input into the demodulation unit DEM, thereby allowing the ARC circuit to perform an ARC processing, based on a noise detection signal D32 measured by the noise measurement unit NDT2 as well as on a field strength detection signal D2, as shown in Fig. 2.
In this way, once an ARC processing based on the ARC circuit is performed in response to the level of a noise component contained in a synthesized intermediate frequency signal IFP, such an ARC processing can be carried out in response to a noise component which is contained in a synthesized intermediate frequency signal IFP having received an adaptation processing and has a correlation with a human's auditory characteristic, thereby making it possible to ensure a further improved reception quality.

### Background example:

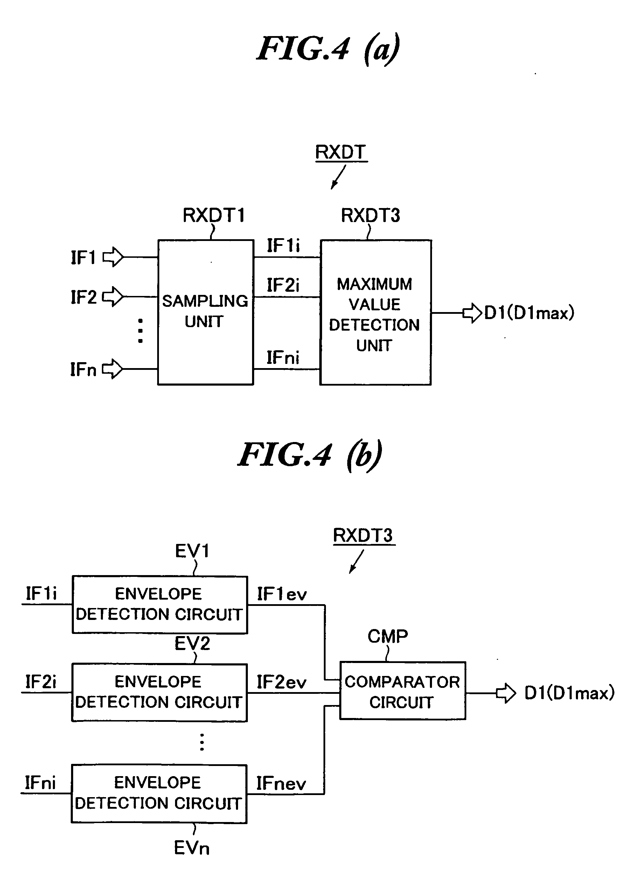

Next, description will be given to explain another example of the receiver which receives FM radio broadcast, with reference to Fig. 4. Fig. 4(a) is a block diagram indicating a structure corresponding to the reception state detection unit RXDT shown in Fig. 2. Fig. 4(b) is a block diagram indicating in detail the structure of a maximum value detector shown in Fig. 4(a).

In fact, the receiver of the present example has substantially the same structure as the receivers shown in Fig. 2 and Fig. 3.

Namely, n reception units RX1-RXn connected with the reception antennas ANT1 - ANTn perform tuning receptions with respect to a desired FM broadcast channel (physical channel) designated by a viewer/listener, thereby converting the respective RF reception signals output from the reception antennas ANT1 - ANTn into intermediate frequency signals. Further, by limiting the frequency bands of these intermediate frequency signals to a predetermined frequency band, the intermediate frequency signals (IF signals) IF1-IFn are generated as desired wave components and supplied to the adaptation equalizers ADF1 - ADFn.
In addition, the respective reception units RX1-RXn operate to convert the intermediate frequency signals IF1-IFn into digital signals in accordance with a sampling frequency fs (a predetermined frequency) based on a sampling theorem, and supply the signals as digital signals to the adaptation equalizers ADF1 -ADFn.

As shown in Fig. 3(b), the adaptation equalizers ADF1-ADFn are formed of transversal filters comprising: shift register units DLY1 - DLYn each having m stages of delay elements DF, which receive and shift the intermediate frequency signals IF1-IFn with an inverse number (1/fs) of the aforementioned sampling frequency fs serving as one delay time; m+1 multipliers for multiplying the output signals of the respective delay elements DF by the coefficient values C1,0-Cl,m; C2,0-C2,m; ..., Cn,O-Cn,m of the tap coefficients; and adders ADD1 - ADDn for adding together the outputs of the respective multipliers.

Then, the adder ADD adds together the outputs of the adders ADD 1 - ADDn, generates an intermediate frequency signal (a synthesized intermediate frequency signal) IFP having its synthesized gain improved, and supplies the same to the FM demodulation unit DEM, thereby generating an FM-demodulated signal Sdem which is then decoded by the audio processing unit AUD, thus reproducing the sound signal. Furthermore, the adaptation algorithm unit ALG1 and the tap coefficient adjustment unit ALG2 shown in Fig. 3(b) will adjust the coefficient values C1,0-C1,m; C2,0-C2,m; ..., Cn,0-Cn,m of the tap coefficients in accordance with the synthesized intermediate frequency signal IFP.

Next, as shown in Fig. 4(a), the reception state detection unit RXDT serving as the characterizing portion of the present example comprises: a sampling unit RXDT1 which receives in parallel the A/D-converted n intermediate frequency signals IF1-IFn in synchronism with the sampling frequency fs; and a maximum value detection unit RXDT3 which extracts and outputs an intermediate frequency signal D 1 capable of reaching its maximum level, from the intermediate frequency signals IF1-IFn sampled in the sampling unit RXDT1.

Here, the maximum value detection unit RXDT3 has a structure shown in Fig. 4(b). As shown, the maximum value detection unit RXDT3 comprises: envelope detection circuits EV1-EVn for detecting the envelopes of the intermediate frequency signals IF1i-IFni sampled in the sampling unit RXDT1; and a comparator circuit CMP for performing a comparison among the levels of the envelop signals IF1ev-IFnev output from the envelope detection circuits EV1-EVn in synchronism with the sampling frequency fs, and outputting an envelop signal D1max of a maximum level as the aforementioned intermediate frequency signal D1.
Then, the field strength measurement unit EDT shown in Fig. 2 generates a field strength detection signal D2 indicating a field strength in accordance with an intermediate frequency signal D1 (i.e., an envelope signal D1max) and supplies the same to the audio processing unit AUC. Meanwhile, the noise measurement unit NDT1 measures the level of a noise component in accordance with the field strength detection signal D2, and supplies a noise detection signal D31 serving as a measurement result to the ARC circuit.

In this way, the ARC circuit will analyze some changes in the field strength detection signal D2 and the noise detection signal D31 in accordance with a predetermined algorithm. If it is determined that a reception state is acceptable, an audio signal decoded by the audio processing unit AUC will be output as stereo signals SL and SR. On the other hand, if it is determined that a field strength is high but a noise amount is large, a frequency characteristic of the noise component will be analyzed and frequency bands of the stereo signals SL and SR will be limited before being output, or the audio signal will be output as a monaural signal, in response to an extent of an undesired effect of the noise component on the stereo signals SL and SR. Further, if it is determined that a field strength is low and a noise amount is large, a soft mute processing will be carried out to reduce the noise amount.

As described above, according to the receiver of the present example it is possible for n reception units RX1-RXn to simultaneously receive a plurality of radio waves arriving at a plurality of (n) reception antennas ANT1-ANTn, and for the adaptation equalizers ADF1 - ADFn, the adder ADD, and the estimation control unit ALG to perform an adaptation processing on the intermediate frequency signals IF1-IFn output from the reception units RX1-RXn, thereby obtaining a synthesized gain higher than an elective reception using only one reception antenna.
Further, it becomes possible to generate a synthesized intermediate frequency signal IFP having compensated an undesired influence caused by a multi-pass fading (especially, a frequency selection fading). Moreover, by using the demodulation unit DEM to demodulate the foregoing synthesized intermediate frequency signal IFP, it is possible to generate a high quality demodulation signal Sdem having a reduced level of a mixed noise or the like, and supply the signal to the audio processing unit AUC.

On the other hand, the reception state detection unit RXDT, the field strength measurement unit EDT, and the noise measurement unit NDT1 will operate to measure a field strength detection signal D2 and a noise detection signal D31 when an optimum reception state has been obtained, in accordance with a maximum level intermediate frequency signal D1 selected from the intermediate frequency signals IF1-IFn output from n reception units RX1-RXn, while the audio processing unit AUC decodes the demodulation signal Sdem.
At this time, The ARC circuit within the audio processing unit AUC operates in accordance with a field strength detection signal D2 and a noise detection signal D31, so as to output a decoded audio signal as stereo outputs or a monaural output, or perform a soft mute processing for reducing a noise amount, or adjust a frequency characteristic and limit a frequency band with respect to a monaural sound or a stereo sound, thereby generating an audio signal not causing an audibly uncomfortable feeling.

Namely, according to the receiver of the present example, when an adaptation processing is performed on the intermediate frequency signals IF1-IFn and the demodulation signal Sdem is decoded, an ARC processing is performed in accordance with a field strength detection signal D2 and a noise detection signal D31 measured based on a maximum level intermediate frequency signal D 1 selected from the intermediate frequency signals IF1-IFn output from the reception units RX1-RXn. Accordingly, it is possible to ensure a conformity between an adaptation processing and an ARC processing, thereby rendering it possible to obtain a higher reception quality stronger against a multi-pass fading.

The receiver of the present example having the foregoing structure has been described based on an example involving a noise measurement unit NDT1 shown in Fig. 2. However, it is also possible to have a modified example in which the noise measurement unit NDT1 has been replaced by a noise measurement unit NDT2 which measures the level of a noise component contained in a synthesized intermediate frequency signal IFP (which is to be input into the demodulation unit DEM), and allow the ARC circuit to perform an ARC processing in accordance with a noise detection signal D32 and a field strength detection signal D2 measured in the noise measurement unit NDT2.
In this way, when the ARC circuit performs an ARC processing based on the level of a noise component contained in a synthesized intermediate frequency signal IFP, such an ARC processing can be carried out in accordance with a noise component contained in a synthesized intermediate frequency signal having received an adaptation processing and having a correlation with a human audible characteristic, thus rendering it possible to ensure a further improved reception quality.

## Claims

1. A receiver having a plurality of antennas for receiving incoming radio waves, the receiver comprising:
- reception means (RX1 - RXn) for receiving respective reception signals output from the plurality of antennas (ANT1 -ANTn) and converting the reception signals into respective intermediate frequency signals (IF1 - IFn) each having a predetermined frequency band;
- adaptation equalizing means (ADF1 -ADFn) for performing an adaptation processing on the respective intermediate frequency signals (IF1 - IFn) output from the reception means (RX1 - RXn) and adding together the intermediate frequency signals, thereby generating a synthesized intermediate frequency signal (IFP) improved in its synthesized gain;
- demodulation means (DEM) for demodulating the synthesized intermediate frequency signal (IFP) generated in the adaptation equalizing means (ADF1 -ADFn), thereby generating a demodulation signal (Sdem);
- audio processing means (AUC) including automatic reception control means, short ARC means for decoding the demodulation signal (Sdem) to reproduce an original signal and for performing an ARC processing to control an output state of the original signal;
- reception state detection means (RXDT) for detecting a reception state from the plurality of the intermediate frequency signals (IF1 - IFn) output from the reception means (RX1 - RXn); **characterised in that**
- the reception state detection means (RXDT) compute an average value of the plurality of the intermediate frequency signals (IF I - IFn) output from the reception means (RX1 - RXn), and detect a reception state based upon the computed average value; and
- field strength measurement means (EDT) for measuring a field strength based upon a detection result of the reception state detection means (RXDT) and for generating a field strength detection signal (D2);
- wherein the ARC means perform an ARC processing in accordance with the field strength detection signal (D2) generated by the field strength measurement means (EDT).

2. The receiver according to claim 1,
further comprising first noise measurement means (NDT1) for measuring a noise component contained in the field strength detection signal (D2) generated by the field strength measurement means (EDT),
wherein the ARC means perform the ARC processing in accordance with the field strength detection signal (D2) and a noise detection signal (D31) measured by the first noise measurement means (NDT1).

3. The receiver according to claim 1 or 2,
further comprising second noise measurement means (NDT2) for measuring a noise component contained in a synthesized intermediate frequency signal (IFP) generated by the adaptation equalizing means (ADF1 -ADFn),
wherein the ARC means perform the ARC processing in accordance with the field strength detection signal (D2) and a noise detection signal (D32) measured by the second noise measurement means (NDT2).

4. A reception method for use with a receiver having a plurality of antennas for receiving incoming radio waves,
the method comprising the following steps:
- a reception step (RX1 - RXn) for receiving respective reception signals output from the plurality of antennas (ANT1-ANTn) and converting the reception signals into respective intermediate frequency signals (IF1 - IFn), each having a predetermined frequency band;
- an adaptation equalizing step (ADF1- ADFn) for performing an adaptation processing on the plurality of intermediate frequency signals (IF1 - IFn) converted in the reception step, thereby generating a synthesized intermediate frequency signal (IFP) improved in its synthesized gain;
- a demodulation step (DEM) for demodulating the synthesized intermediate frequency signal (IFP) generated in the adaptation equalizing step (ADF1-ADFn), thereby generating a demodulation signal (Sdem);
- an audio processing step (AUC) including an automatic reception control, short ARC processing step for decoding the demodulation signal (Sdem) to reproduce an original signal and for performing an ARC processing to control an output state of the original signal;
- a reception state detecting step (RXDT) for detecting a reception state from the plurality of the intermediate frequency signals (IF1 - IFn) converted in the reception step;
- wherein the reception state detection step (RXDT) computes an average value of the plurality of the intermediate frequency signals (IF1 - IFn) converted in the reception step, and detects a reception state based upon the computed average value; and
- a field strength measuring step (EDT) for measuring a field strength (D2) based upon a detection result detected in the reception state detection step (RXDT);
- wherein the ARC processing step performs an ARC processing in accordance with the field strength detection signal (D2) generated in the field strength measuring step (EDT).

## Patentansprüche

1. Empfänger mit einer Vielzahl von Antennen zum Empfangen ankommender Funkwellen, wobei der Empfänger folgendes aufweist:
- Empfangseinrichtungen (RX1 - RXn) zum Empfangen von jeweiligen Empfangssignalen, die von der Vielzahl von Antennen (ANT1 - ANTn) abgegeben werden, und zum Umwandeln der Empfangssignale in jeweilige Zwischenfrequenzsignale (IF1 - IFn), die jeweils ein vorbestimmtes Frequenzband aufweisen;
- Anpassungs-Ausgleichseinrichtungen (ADF1 - ADFn) zum Durchführen einer Anpassungsverarbeitung der jeweiligen Zwischenfrequenzsignale (IF1 - IFn), die von den Empfangseinrichtungen (RX1 - RXn) abgegeben werden, und zum Aufaddieren der Zwischenfrequenzsignale, um dadurch ein synthetisiertes Zwischenfrequenzsignal (IFP) zu erzeugen, das in seiner synthetisierten Verstärkung verbessert ist;
- Demodulationseinrichtungen (DEM) zum Demodulieren des in den Anpassungs-Ausgleichseinrichtungen (ADF1 - ADFn) erzeugten, synthetisierten Zwischenfrequenzsignals (IFP), um dadurch ein Demodulationssignal (Sdem) zu erzeugen;
- Audio-Verarbeitungseinrichtungen (AUC), die automatische Empfangssteuereinrichtungen (kurz: ARC-Einrichtungen) zum Decodieren des Demodulationssignals (Sdem), um ein ursprüngliches Signal zu reproduzieren, und zum Durchführen einer ARC-Verarbeitung beinhalten, um einen Ausgangszustand des ursprünglichen Signals zu steuern;
- Empfangszustands-Erfassungseinrichtungen (RXDT) zum Detektieren eines Empfangszustands von der Vielzahl der Zwischenfrequenzsignale (IF1 - IFn), die von den Empfangseinrichtungen (RX1 - RXn) abgegeben werden,
**dadurch gekennzeichnet,**
- **dass** die Empfangszustands-Erfassungseinrichtungen (RXDT) einen Durchschnittswert der Vielzahl der von den Empfangseinrichtungen (RX1 - RXn) abgegebenen Zwischenfrequenzsignale (IF1 - IFn) berechnen und einen Empfangszustand auf der Basis des berechneten Durchschnittswerts detektieren; und
- **dass** Feldstärken-Messeinrichtungen (EDT) zum Messen einer Feldstärke auf der Basis eines Erfassungsresultats der Empfangszustands-Erfassungseinrichtungen (RXDT) und zum Erzeugen eines Feldstärken-Erfassungssignals (D2) vorhanden sind;
- wobei die ARC-Einrichtungen eine ARC-Verarbeitung in Abhängigkeit von dem von den Feldstärken-Messeinrichtungen (EDT) erzeugten Feldstärken-Erfassungssignal (D2) ausführen.

2. Empfänger nach Anspruch 1,
wobei der Empfänger ferner eine erste Rausch-Messeinrichtung (NDT1) zum Messen einer Rauschkomponente aufweist, die in dem von den Feldstärken-Messeinrichtungen (EDT) erzeugten Feldstärken-Erfassungssignal (D2) enthalten ist,
wobei die ARC-Einrichtungen die ARC-Verarbeitung in Abhängigkeit von dem Feldstärken-Erfassungssignal (D2) und einem von den ersten Rausch-Messeinrichtungen (NDT1) gemessenen Rauscherfassungssignal (D31) ausführen.

3. Empfänger nach Anspruch 1 oder 2,
wobei der Empfänger ferner zweite Rausch-Messeinrichtungen (NDT2) zum Messen einer Rauschkomponente aufweist, die in einem von den Anpassungs-Ausgleichseinrichtungen (ADF1- ADFn) erzeugten, synthetisierten Zwischenfrequenzsignal (IFP) enthalten ist,
wobei die ARC-Einrichtungen die ARC-Verarbeitung in Abhängigkeit von dem Feldstärken-Erfassungssignal (D2) und einem von den zweiten Rausch-Messeinrichtungen (NDT2) gemessenen Rauscherfassungssignal (D32) ausführen.

4. Empfangsverfahren zur Verwendung bei einem Empfänger mit einer Vielzahl von Antennen zum Empfangen ankommender Funkwellen, wobei das Verfahren folgende Schritte aufweist:
- einen Empfangsschritt (RX1 - RXn) zum Empfangen von jeweiligen Empfangssignalen, die von der Vielzahl von Antennen (ANT1 - ANTn) abgegeben werden, und zum Umwandeln der Empfangssignale in jeweilige Zwischenfrequenzsignale (IF1 - IFn), die jeweils ein vorbestimmtes Frequenzband aufweisen;
- einen Anpassungs-Ausgleichsschritt (ADF1 - ADFn) zum Ausführen einer Anpassungsverarbeitung der Vielzahl der in dem Empfangsschritt umgewandelten Zwischenfrequenzsignale (IF1 - IFn), um dadurch ein synthetisiertes Zwischenfrequenzsignal (IFP) zu erzeugen, das in seiner synthetisierten Verstärkung verbessert ist;
- einen Demodulationsschritt (DEM) zum Demodulieren des in dem Anpassungs-Ausgleichsschritt (ADF1 - ADFn) erzeugten, synthetisierten Zwischenfrequenzsignals (IFP), um dadurch ein Demodulationssignal (Sdem) zu erzeugen;
- einen Audio-Verarbeitungsschritt (AUC), der einen automatischen Empfangssteuerungsschritt (kurz ARC-Verarbeitungsschritt) zum Decodieren das Demodulationssignals (Sdem), um ein ursprüngliches Signal zu reproduzieren, und zum Durchführen einer ARC-Verarbeitung beinhaltet, um einen Ausgangszustand des ursprünglichen Signals zu steuern;
- ein Empfangszustands-Erfassungsschritt (RXDT) zum Detektieren eines Empfangszustands aus der Vielzahl der in dem Empfangsschritt umgewandelten Zwischenfrequenzsignale (IF1 - IFn);
- wobei der Empfangszustands-Erfassungsschritt (RXDT) einen Durchschnittswert der Vielzahl der in dem Empfangsschritt umgewandelten Zwischenfrequenzsignale (IF1 - IFn) berechnet und einen Empfangszustand auf der Basis des berechneten Durchschnittswerts erfasst; und
- einen Feldstärken-Messschritt (EDT) zum Messen einer Feldstärke (D2) auf der Basis eines in dem Empfangszustands-Erfassungsschritt (RXDT) detektierten Erfassungsresultats;
- wobei der ARC-Verarbeitungsschritt eine ARC-Verarbeitung in Abhängigkeit von dem in dem Feldstärken-Messschritt (EDT) erzeugten Feldstärken-Erfassungssignal (D2) ausführt.

## Revendications

1. Récepteur présentant une pluralité d'antennes destinées à recevoir des ondes radio entrantes, le récepteur comprenant:
- des moyens de réception (RX1 - RXn) pour recevoir des signaux de réception respectifs délivrés en sortie par la pluralité d'antennes (ANT1 - ANTn) et convertir les signaux de réception en signaux de fréquence intermédiaire respectifs (IF1 - IFn), chacun d'eux présentant une bande de fréquence prédéterminée;
- des moyens d'égalisation d'adaptation (ADF1 - ADFn) pour exécuter un traitement d'adaptation sur les signaux de fréquence intermédiaire respectifs (IF1 - IFn) délivrés en sortie par les moyens de réception (RX1 - RXn) et ajouter les signaux de fréquence intermédiaire, en générant de ce fait un signal de fréquence intermédiaire synthétisé (IFP) dont le gain synthétisé est amélioré;
- des moyens de démodulation (DEM) pour démoduler le signal de fréquence intermédiaire synthétisé (IFP) généré dans les moyens d'égalisation d'adaptation (ADF1 - ADFn), en générant de ce fait un signal de démodulation (Sdem);
- des moyens de traitement audio (AUC) comprenant des moyens de commande de réception automatique (ARC), des moyens d'ARC courts pour décoder le signal de démodulation (Sdem) afin de reproduire un signal original et d'exécuter un traitement d'ARC pour commander un état de sortie du signal original;
- des moyens de détection d'état de réception (RXDT) pour détecter un état de réception à partir de la pluralité de signaux de fréquence intermédiaire (IF1 - IFn) délivrés en sortie par les moyens de réception (RX1 - RXn);
**caractérisé en ce que**:
- les moyens de détection d'état de réception (RXDT) calculent une valeur moyenne de la pluralité de signaux de fréquence intermédiaire (IF1 - IFn) délivrés en sortie par les moyens de réception (RX1 - RXn), et détectent un état de réception sur la base de la valeur moyenne calculée; et
- des moyens de mesure d'intensité de champ (EDT) pour mesurer une intensité de champ sur la base d'un résultat de détection des moyens de détection d'état de réception (RXDT) et générer un signal de détection d'intensité de champ (D2);
- dans lequel les moyens d'ARC exécutent un traitement d'ARC selon le signal de détection d'intensité de champ (D2) généré par les moyens de mesure d'intensité de champ (EDT).

2. Récepteur selon la revendication 1,
comprenant en outre des premiers moyens de mesure de bruit (NDT1) pour mesurer une composante de bruit contenue dans le signal de détection d'intensité de champ (D2) généré par les moyens de mesure d'intensité de champ (EDT);
dans lequel les moyens d'ARC exécutent le traitement d'ARC selon le signal de détection d'intensité de champ (D2) et un signal de détection de bruit (D31) mesuré par les premiers moyens de mesure de bruit (NDT1).

3. Récepteur selon la revendication 1 ou 2,
comprenant en outre des seconds moyens de mesure de bruit (NDT2) pour mesurer une composante de bruit contenue dans un signal de fréquence intermédiaire synthétisé (IFP) généré par les moyens d'égalisation d'adaptation (ADF1 - ADFn);
dans lequel les moyens d'ARC exécutent le traitement d'ARC selon le signal de détection d'intensité de champ (D2) et un signal de détection de bruit (D32) mesuré par les seconds moyens de mesure de bruit (NDT2).

4. Procédé de réception destiné à être utilisé avec un récepteur présentant une pluralité d'antennes destinées à recevoir des ondes radio entrantes,
le procédé comprenant les étapes suivantes:
- une étape de réception (RX1 - RXn) consistant à recevoir des signaux de réception respectifs délivrés en sortie par la pluralité d'antennes (ANT1 - ANTn) et à convertir les signaux de réception en signaux de fréquence intermédiaire respectifs (IF1 - IFn), chacun d'eux présentant une bande de fréquence prédéterminée;
- une étape d'égalisation d'adaptation (ADF1 - ADFn) consistant à exécuter un traitement d'adaptation sur la pluralité de signaux de fréquence intermédiaire (IF1 - IFn) convertis dans l'étape de réception, en générant de ce fait un signal de fréquence intermédiaire synthétisé (IFP) dont le gain synthétisé est amélioré;
- une étape de démodulation (DEM) consistant à démoduler le signal de fréquence intermédiaire synthétisé (IFP) généré dans l'étape d'égalisation d'adaptation (ADF1 - ADFn), en générant de ce fait un signal de démodulation (Sdem);
- une étape de traitement audio (AUC) comprenant une commande de réception automatique, étape de traitement d'ARC courte consistant à décoder le signal de démodulation (Sdem) afin de reproduire un signal original et d'exécuter un traitement d'ARC pour commander un état de sortie du signal original;
- une étape de détection d'état de réception (RXDT) consistant à détecter un état de réception à partir de la pluralité de signaux de fréquence intermédiaire (IF1 - IFn) convertis dans l'étape de réception (RX1 - RXn);
- dans lequel l'étape de détection d'état de réception (RXDT) calcule une valeur moyenne de la pluralité de signaux de fréquence intermédiaire (IF1 - IFn) convertis dans l'étape de réception (RX1 - RXn), et détecte un état de réception sur la base de la valeur moyenne calculée; et
- une étape de mesure d'intensité de champ (EDT) consistant à mesurer une intensité de champ (D2) sur la base d'un résultat de détection détecté dans l'étape de détection d'état de réception (RXDT);
- dans lequel l'étape de traitement d'ARC exécute un traitement d'ARC selon le signal de détection d'intensité de champ (D2) généré dans l'étape de mesure d'intensité de champ (EDT).
